# EUROPEAN PATENT SPECIFICATION

(11) **EP 1 436 138 B1**
(45) Date of publication and mention of the grant of the patent: **17.05.2006**
(21) Application number: 02787537.6
(22) Date of filing: 14.10.2002
(51) Int. Cl.: B29C 47/90, B29C 47/94, B29C 47/06, B29C 55/28, B29C 47/88

(54) **LONGITUDINAL ORIENTATION OF A TUBULAR THERMOPLASTIC FILM**
LÄNGSORIENTIERUNG VON SCHLAUCHFOLIEN AUS THERMOPLASTISCHEM KUNSTSTOFF
ORIENTATION LONGITUDINALE D'UN FILM THERMOPLASTIQUE TUBULAIRE

(30) Priority: 15.10.2001 WO PCT/EP01/12430; 21.06.2002 GB 0214427
(43) Date of publication of application: 14.07.2004
(73) Proprietor: Rasmussen, Ole-Bendt, 6318 Walchwil (CH)
(72) Inventor: Rasmussen, Ole-Bendt, 6318 Walchwil (CH)
(74) Representative: Jones, Helen M.M.
(86) International application number: PCT/EP2002/012193
(87) International publication number: WO 2003/033241

(56) References cited:
- EP-A- 0 231 657
- EP-A- 1 188 541
- WO-A-02/051617
- DE-A- 2 602 899
- US-A- 3 949 042
- US-A- 5 102 320
- US-A- 5 322 664
- US-A- 6 155 813

## Description

The invention concerns method and apparatus as stated in the title. More specifically a substantial proportion of such orientation takes place by annular frictional means set up between the circular exit orifice of an annular extrusion die and the draw-down means (rollers, belts or the like) which hauls off the tube from the die, when the film is in molten or semi-molten state.

The invention has been conceived with a special view to the manufacture of cross-laminates, i.e. laminates comprising two or more films which each are uniaxially oriented or are biaxially oriented with one direction dominating, and are laminated with the (dominating) directions of orientation crossing each other. This can in practice be done by giving a tubular film a generally uniaxial orientation, cutting it helically to from a web with biassed orientation, and laminating two or more such webs with the orientations criss-crossing each other. There can also be a generally longitudinally orientated web included in the laminate.

Alternatively or supplementarily, the orientation on bias can be achieved in generally molten state by "twisting" the tubular film while it is hauled off form the extrusion die.

A survey over the technology concerning cross laminated film is given in the inventor's WO-A-93/14928.

More precisely expressed the method of the invention concerns a process of forming a tubular oriented film by extruding a flow of at least one molten thermoplastic material from a circular extrusion die, in which process the flow having left a circular exit orifice in the die is cooled and is oriented at least in the longitudinal direction while it still is at least partly molten, whereby the longitudinal orientation takes place by a pulling force set up between the exit orifice and moving draw-down means.

In this process the still at least partly molten flow on its travel between the exit orifice and the draw-down means passes and is in frictional contact with an annular device (hereinafter the frictional device), and the frictional force set up by this contact is variable in controllable manner other than by adjusting the temperature in the flow or the tensions in the flow during its contact with the device.

A method and an apparatus of this kind is known from DE-A-4308689. That invention carries out the longitudinal orientation mainly in molten state and the transverse orientation mainly within the "range of crystallization", whereby the effect of blowing to obtain transverse orientation is enhanced. In that respect the technology deviates from the aim of the present invention, which is to promote longitudinal orientation. However, in DE-A-4308689 there is an annular insert in the bubble which, necessarily although unintendedly, by friction against the film contributes to its longitudinal orientation. There is an annular nozzle surrounding this annular insert which blows towards the tube and the insert. At this stage the tube is in "the range of crystallization". The function of those devices is to separate a first part of the film - "bubble" from the rest, so that the tube can be strongly blown by over pressure in the "bubble" when the thermoplastic material has been brought into the "range of crystallization". At the same time the pressure in the bubble is kept near to the ambient pressure in the zone where the material is fully molten, so that transverse stretching here is avoided.

In addition to strong air-cooling from the outside of the bubble in DE-A-4308689, there is internal air cooling in the bubble upstream of the mentioned insert. This will also cool the insert, but there is not disclosed any means for controlling the temperature of this insert. The friction against the extruded tube can probably for a given temperature of the insert and a given pressure in the bubble downstream of the insert, be controlled by the amount of air blown towards the tube while the latter passes the insert, however the prior art does not mention anything about such control of friction.

A patent from about 1975 issued to the Dutch Van Leer organization or one of its subsidiaries (the inventor has not at the time of filing this application been able to identify it further) concerns longitudinal orientation of the extruded tube in solid state over a mandrel inside th tube, while the latter is hauled off from the extrusion die.

However in practice it is very difficult to carry out this method due to strong contraction forces which are set up when the solid film is drawn, and which tries to hold the tube firmly to the mandrel.

Finally it should be mentioned that mandrels inside the extruded tube have been widely used for calibration of the tube. As examples reference is made to GB-A-2112703, US-A-5,322,664 and EP-A-0285368.

The present invention being the process of forming a tubular oriented film and the device therefor is defined in claims 1 and 25 respectively.

Preferred embodiments of the invention are the subject of the dependent claims.

The shrinkability preferably is of a factor of no less than about 4, referring to shrink testing carried out at the upper limit of the melting range of the extruded film, that is the film, when heated to the shrink testing temperature shrinks in the longitudinal direction to one quarter or less of its length. Furthermore in the process it is generally the case that the main proportion of the orientation takes places while the polymer mentioned or materials is or are molten and partly crystallised.

Having left the frictional device the tubular film may be allowed to contract during the longitudinal stretching, or the air pressure inside the bubble may maintain the diameter of the tube or even lead the tube to become strongly blown to obtain transverse orientation. Such blowing normally requires special precautions to be taken, which shall be mentioned later.

By use of the present invention, as this is defined above, the longitudinal melt orientation can be adjusted with a particular precision and/or be made particularly strong. This has importance for several uses especially for the above-mentioned use in cross-laminates.

For achieving a particular high melt orientation, an embodiment of the invention is characterised in that the main proportion of the orientation takes place while the polymer material or materials partly is/are molten and partly crystallized. Preferably at least 5% of the polymer material or materials should be crystallized during that orientation. Thus the polymer flow may advantageously contain a blend of at least two compatible or compatibilised polymers, and the main proportion of the orientation then should take place while one polymer is predominantly in a crystalline state and the other is predominantly in a molten state.

Another embodiment of the invention is characterised in that the friction between the frictional device and the film is controlled by air-lubrication with air which is pressed through holes in the frictional device or through microporous metal, which forms at least a zone of the surface which the flow contacts.

Alternatively, the friction may be controlled by sucking the flow against the frictional device. Thus the suction can be applied through microporous metal, or the surface which the flow contacts can have a grooved pattern, whereby the grooves are circular around the die axis. The grooves are then subjected to a controlled under pressure.

The pulling force on the frictional device can be monitored and used through feed-back means for adjustment of the over- or under- pressure which determines the friction, whereby the degree of orientation is controlled.

In case the extruded tubular film is particularly thick and/or from a polymer of a particularly high molecular weight, the frictional device may have a surface temperature in or above the melting range of the main body of the film. However, this an exception, and normally this device should have a temperature which, when the film is coextruded and has a low melting surface layer on the side facing this device, is even lower than the melting range of this surface layer, otherwise it may be too difficult to obtain a frictional but smooth gliding of the film over the frictional device. This means that the time of contract must be so short that only a very thin surface layer will solidify, while the main body of the film maintains a temperature which is near the predetermined temperature of stretching. The thin solidified layer will melt or part-melt again when it has left the frictional device by heat from the interior of the film.

In order to achieve a particular high frictionally controlled orientation, the temperature of the film during the stretching must be kept within the crystallisation range or slightly above this, as it already appears from the foregoing. Under such circumstances the film should normally be efficiently cooled before it meets the frictional device. For this purpose an embodiment of the invention is characterised in that upstream of the frictional device there is a generally annular, cylindrical or conical part (hereinafter the shock-cooling part) installed for cooling inside or outside the bubble. The flow passes and contacts this in a generally frictionless or low friction manner as established e.g. by air lubrication through microporous metal or through holes. This part is cooled from its inside by means of a fluid cooling medium and kept at a temperature which is sufficiently low to take away at least half of the heat needed to bring the temperature in the flow down to the desired value for the orientation.

Upstream of the frictional device but downstream of the just mentioned shock-cooling part if such part is used, there is a part (hereinafter the "temperature fine adjustment part") of a similar construction as the shock-cooling part, but adapted for a fine adjustment of the average temperature in the flow.

The following succession of apparatus parts are preferably in close proximity to one another or mutually connected through low-heat- transfer connections:
a) the diepart forming one side of the exit orifice,
b) the shock-cooling part if present,
c) the temperature fine adjustment part if present,
d) the frictional device.

All apparatus parts in this succession are on the same side of the bubble, inside or outside.

A preferable way to achieve even and efficient cooling of the tubular film immediately upon its exit from the die, is for the flow to leave the exit orifice under an angle of at least 20° to the axis of the die, its direction of movement pointing either away from or towards the axis, and then meet a cooling part which is in close proximity to the exit orifice or connected to the diepart forming one side of the exit orifice. (Of course the channel forming the exit orifice then should also form an angle of close to 20° or more to the die axis). The mentioned cooling part will be the shock-cooling part described above if that is used, or otherwise the temperature fine adjustment part also described above if that is used or otherwise the frictional device. A substantial part of the zone in which the flow follows the mentioned part should be rounded when seen in axial section, so that the film gradually is turned at least 20° in the direction towards the die axis while it moves over this part or this assemblage of parts.

This arrangement of the exit from the die can be achieved very conveniently when the exit orifice of the die either is at the outer peripherical surface of the die or, if the die has a central cavity which is defined by an inner periphery, is at the inner peripherical surface of the die. This is also a very practical arrangement in connection with the start-up of the extrusion since it then is easier to get hold of the molten mass and feed it over the cooling and temperature controlling annular parts.

Thus it is advantageous for the flow to leave the die under an angle of 90° or close to 90° to the axis. This has the additional advantage that the gap of the exit orifice can be adjusted from location to location as is usually with flat dies. To achieve this at least one side of the exit orifice can be defined by a lip which is sufficiently flexible to allow different adjustments of the gap of the orifice from location to location. Simple mechanical devices like push-pull screws or more sophisticated devices, known from construction of flat dies, can be used for this.

It is noted that peripherical extrusion as such is known, see US-A-2769200 (Longstretch et al.), US-A-2952872 (Buteau et al.), US-A-3079636 (Aykanian) and US-A-3513504 (Ronden et al). The purpose of peripherical extrusion in these patent is to achieve a high blow ratio without any damage to the film. These patents do not disclose the use of an annular device to turn the direction in which the film moves from the transverse toward a more axial direction, but they do disclose the adjustment means at the exit orifice.

As mentioned in the foregoing the tubular film may be allowed to contract circumferentially during the longitudinal stretching, while it is hauled off from the frictional device - in this way the orientation may become truly uniaxial - or it may, by an inside pressure, maintain its diameter or even become blown by a relatively high over-pressure and thereby achieve a significant transverse orientation in addition to the longitudinal component of orientation. The following measures can be taken in order to avoid the over-pressure acting on the tubular film before the latter leaves the frictional device:
If the frictional device is inside the bubble, the part of the air which is contained in the flow before the latter meets the frictional device (hereinafter air 1) is closed off from the air which is contained in the flow after the latter has left the frictional device (hereinafter air 2), and air 2 is kept under a pressure which is substantially higher than the pressure in the ambient atmosphere, while the pressure in air 1 approximately is kept at this ambient pressure. If the frictional device is outside the bubble, there is provided a closed space between the die and the frictional device for the air surrounding the bubble, and the air pressure inside the bubble is kept substantially higher than the ambient pressure, while the outside pressure within the closed space approximately matches the pressure inside the bubble.

As it has been emphasized in the foregoing a particularly important application of the invention is in the manufacture of cross-laminates. For this and several other uses, the flow leaving the die should normally be a coextrudate of two, three or more layers, e.g. a main layer for tensile strength in the middle and thin lamination and/or heatseal layers on one or both surfaces. For the manufacture of cross-laminates the parameters of the process should be adapted to provide a tubular film with an orientation which is predominantly longitudinal or follows a helical direction in the tube. To obtain a predominantly helical or "screwed" orientation there can be established a rotation between a first end comprising the draw-down means and a second end comprising the extrusion die with the frictional device, the shock-cooling part (if this part is used), and the "temperature fine adjustment part" (if this part is used).

The invention shall now be explained in further detail with reference to the drawings, which all show sections made through the axis of the annular extrusion die.
Fig. 1 shows the last part of a coextrusion die with connected frictional device over which the film is bent during the haul off. The extrusion is outwardly peripherical through an exit orifice in the external periphery of the die.
Fig.2 is similar to fig. 1, but showing inwardly peripherical extrusion through an exit orifice in the internal periphery of the die, which has a wide tubular cavity around its centre.
Fig.3 is similar to fig. 1, but in addition to the frictional device there is a shock-cooling-part and a temperature-fine-adjustment-part.
Fig.4 is similar to fig. 3, but for inwardly peripherical extrusion like in fig. 2.
Fig. 5 shows the last part of a coextrusion die in which the exit orifice is arranged through the generally plane die surface, which is perpendicular to the axis, like a known annular die for film extrusion, but with the exit orifice pointing inwardly under an angle of about 20°. The die is supplied with a shock-cooling-part, a temperature-fine-adjustment-part, and a frictional device.
Fig.6 shows, in about natural size, a modification of the "frictional device" of fig. 3.

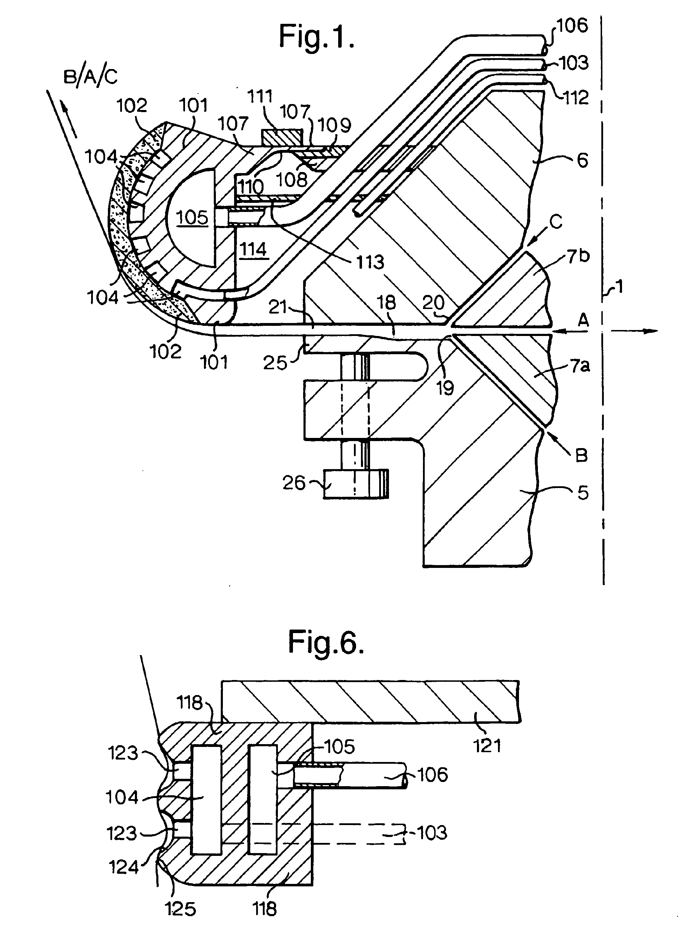

The peripherical annular coextrusion of which the outward part is shown in fig. 1, can conveniently be the die which in full is shown in the inventor's copending WO-A-02/51617 figs. 7 to 9 (one of the patent applications, from which priority is claimed for the present case). The reference numerals for the die itself are also taken from these figures. The die axis is parallel with the dot-dash line (1), but as the arrow indicates the real axis is much more to the right in the drawing. Other construction of the peripherical coextrusion die can of course also be used.

The die is assembled from bowl-and disc-formed parts, of which (5), (6), (7a) and (7b) appear from fig. 1. Three components (A), (B) and (C) are coextruded to form the film B/A/C. If the invention is used to make films to become cross-laminated, (A) which forms the middle layers would be the layer to supply the main strength, while (B) and (C), the surface layers, should form lamination and/or heatseal layers (referring to the above mentioned patents regarding cross-lamination technology). They should then exhibit lower melt-ranges and normally also lower melt viscosities than (A). As a practical example, (A) may be a compatibilised blend of 25% homo-polypropylene of a relatively high molecular weight, 25% HMWHDPE and 50% LLDPE, (C) if chosen as heatseal layer can be plain LLDPE, and (B) if chosen as lamination layer can be a low melting copolymer of ethylene as e.g. EPDM or low melting metallocene polyethylene - or a blend or such polymer with LLDPE, (B) merges with (A) at the internal orifice (19) while (C) merges with (A) at the internal orifice (20). These two orifices are here shown immediately adjacent to each other, and for rheological reasons this is very advantageous when the surface components have lower melt viscosities than the middle component.

The three merged components proceed through the exit channel (18) towards the exit (21) in radial direction. Having left the exit, the tubular B/A/C-film is pulled, still in a radial direction, towards the outer surface of "the frictional device" (101). Here it is bent upward, following the surface of the "frictional device" (101), which forms part of a toroid ("donut-shape"). During this travel it is cooled by the frictional device (101) and is air lubricated, but in a controlled manner so that there is a controlled friction between the frictional device (101) and the film. The friction in combination with the temperatures in the B/A/C film controls the longitudinal orientation which is introduced in the film. The means for air lubrication, temperature control and control of friction are explained below.

Having left the frictional device (101), the B/A/B film may, by an over-pressure within the bubble, have its diameter expanded and thereby also get a significant transverse orientation, but if a significantly uniaxial character of the orientation is preferred, the blow ratio should be very low or may even be inverse (contraction). Due to rather high contracting forces during the longitudinal stretching there should normally be established an over-pressure inside the bubble also when the tube contracts.

Having left the frictional device (101) the B/A/C-film is further cooled by air (not shown), preferably both external and internal cooling, in well-known manner. It is hauled off also in well-known manner (not shown) by use of a collapsing frame and driven rollers, and normally thereafter spooled up as a flat film. Due to high stretching forces it may be necessary to substitute the collapsing frame by a set of converging transport belts, a method which also is known, e.g. from the above mentioned US-A-3513504.

At the exit orifice (21) one die lip (25) is made adjustable with the possibility to have the gap varying around the circumference and thereby compensate for accidental differences in the flow. This can be done in simple manner when the channel here is flat (as shown) or almost flat instead of being pronouncedly conical or being tubular. The adjustment can be made by a circular row of screws, of which one (26) is shown. It is sketched as a simple screw but could also be a push-pull screw. Instead of screws there can also e.g. be used thermally expansive devices as now used for similar adjustments of the exit orifice in flat dies.

As already mentioned it is not new to carry out peripherical extrusion, and in this connection such adjustment of the exit orifice is also known. However, it is of particular importance in connection with the present invention, since the normal precautions to achieve even film thickness would cause difficulties. These normal precautions work on the principle of different cooling of the extruded tubular film at different circumferential positions, either established by local air cooling of the bubble, or differential local cooling of a dielip. However, such systems do not combine well with the contact cooling of the film used in the present invention.

Details regarding the air lubrication and the cooling of the B/A/C-film on the frictional device (101), and means to controls friction and temperature, will now be explained. The frictional device (101) can be made of steel, and almost the whole of the surface which the film passes over, is made from microporous metal, shown as a rounded plate (102). This can be screwed to the base steel part of the frictional device (101). (None of the drawings will show any of the screws used to connect the different dieparts). The microporous plate can conveniently have pore size around 0,01 mm. The compressed air for the air lubrication is fed through a number of pipes, of which fig. 1 shows one (103). It is distributed over a network of channels in (101). The drawing shows only the channels (104) which extend circularly centred on the axis of the die. The drawing does not show the channels which extend perpendicularly to channels (104). In some cases there should be applied suction instead of over-pressure, namely when the film is especially thick and/or of an especially high average molecular weight.

The frictional device (101) is supplied with an annular cavity (105) for circulation of a cooling fluid, e.g. water, oil or air. The circulating fluid allows the temperature of the surface of (101) to be controlled within a few degrees. For that purpose there can be provided a thermocouple relatively dose to the surface (not shown).

The cooling fluid is directed in and out of the annular cavity (105) through pipes of which one (106) is shown. These pipes and the other pipes mentioned above and below pass out through a large cavity at the centre of the die, which cavity appears from the above mentioned fig. 7 in patent application WO-A-0251617. The pipes for the cooling fluid are connected with a circulation pump and a heating/cooling unit. Similarly, the above mentioned pipes (103) are connected with an air-accumulator and a compressor (or vacuum pump if suction is used) with means to adjust the pressure.

The frictional device (101) is fixed to die part (6) through a number of arms (e.g. three or four) of which one (107) is shown. Die part (6) has corresponding arms (108) each of which is fixed to an arm (107) through a heat insulating plate (109). This is done in order to avoid any significant heat transfer between the hot diepart and the much colder frictional device. Each of the arms (107) has a relatively thin bridge part (110), thin enough to achieve measurable variations in bending with variable pull in the film, and at least one of these thin portions is supplied with a suitable dynamometer e.g. a strain gauge device (111). Signals from this device are fed to the devices which control the over-pressure or vacuum, reducing or increasing the friction between the film and the frictional device (101), so that the orientation is kept at the desired value. In order not to make too much resistance against the bending of (111), each of the pipes (103), (106) and (112) - the last will be described below - may comprise a corrugated segment (not shown).

Internal air cooling and the air pressure required to maintain the blow ratio which has been set; are established by conventional devices. The devices pass through the above mentioned cavity at the centre of the die. This is closed off from the environment. A thin plate (113), installed between die part (6) and frictional device (101) separates the inside of the bubble, which is held under pressure, from the space (114) between die and frictional device, and this space is kept at about ambient pressure through the pipe (112). Without the dividing plate (113) the film would be ruined by the pressure inside the bubble as it leaves the exit (21).

Since, roughly speaking, about half of the heat used to cool down the film to about ambient temperature, will be taken by the contact cooling, and normal air cooling systems used thereafter, the "tower" with haul-off devices can be very short. If a helically extending orientation is wanted, these haul-off devices may rotate around the die axis, and the flat tubular film may be reeled up at the top of the "tower".

Using the above mentioned example in which the main layer consists of a blend of homo-PP (solidifying at about 160° C), HMWHDPE (solidifying at about 125° C) and LLDPE (solidifying at about 120° C), the film will leave the exit (21) with a temperature of about 220-240°C and to achieve a convenient high longitudinal orientation, a considerable amount of the draw-down can e.g. take place between 130-150°C. To achieve sufficiently quick cooling, and also to avoid that the lower-melting surface layer inside the bubble sticks to (101), the latter may be cooled e.g. to about 50°C. The length of the film-travel over the surface of (101) must be adapted so that, when the film leaves (101), its average temperature still will not have reached down to 125°C. A thin part of the film directly contacting (101) will be cooled below this and solidify, but will melt again when the film has left (101).

Depending on the balance between longitudinal draw-down ratio, temperatures and frictional resistance, the majority of this draw-down may take place before or after PP has crystallized. Thus e.g. a 2,5 mm thick film leaving exit (21) may be drawn down to a thickness of 0,250 mm before the PP solidifies and thereafter drawn down to a thickness of 0,05 mm.

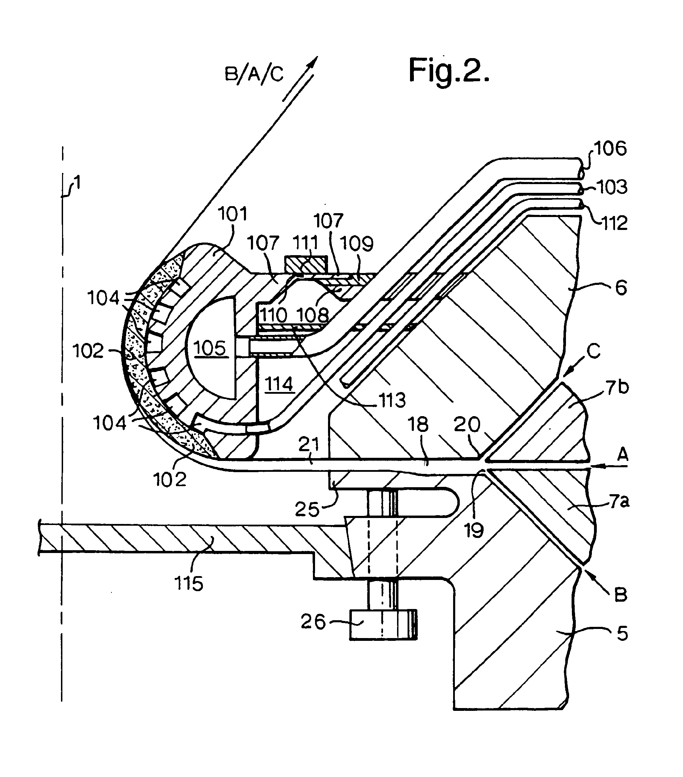

In fig. 2, relating to extrusion out of a peripherical exit leading into an interior cavity in the circular die, the die axis is indicated by the dot-and-dash line (1). The upper part of this cavity is closed off from the atmosphere by means of the circular plate (115). Over this plate, inside the bubble there is kept an over-pressure, and there is internal cooling. Devices for imposing the pressure and cooling are not shown. By means of the thin plate (113) the space (114) is separated from the atmosphere, and the pressure in this space is through the pipe (112) kept at approximately the same value as the pressure inside the bubble (which is shown on the left of the film). In other respects fig. 2 can fully be understood on basis of what is explained in connection with fig. 1.

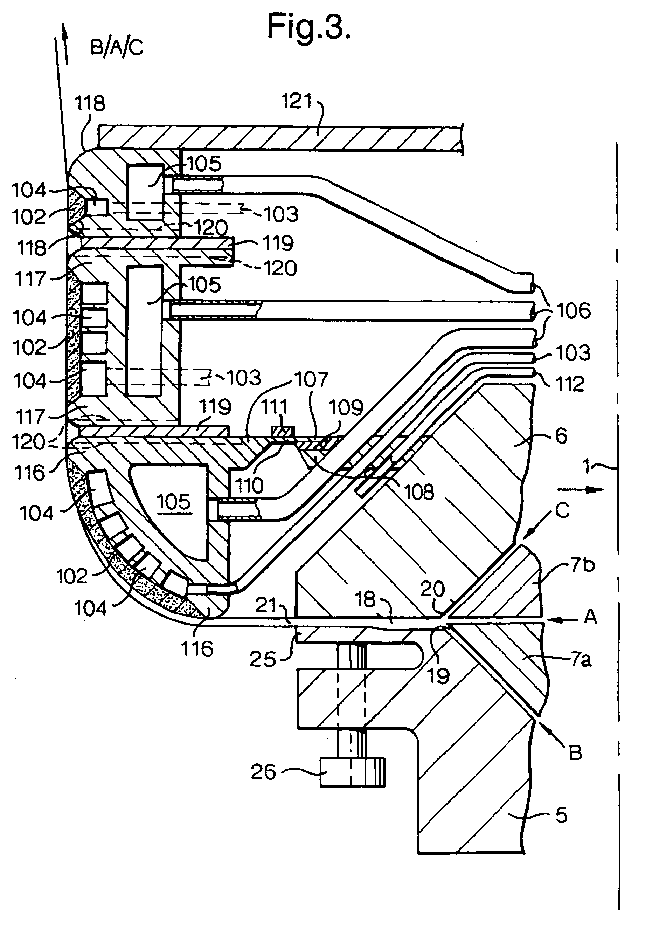

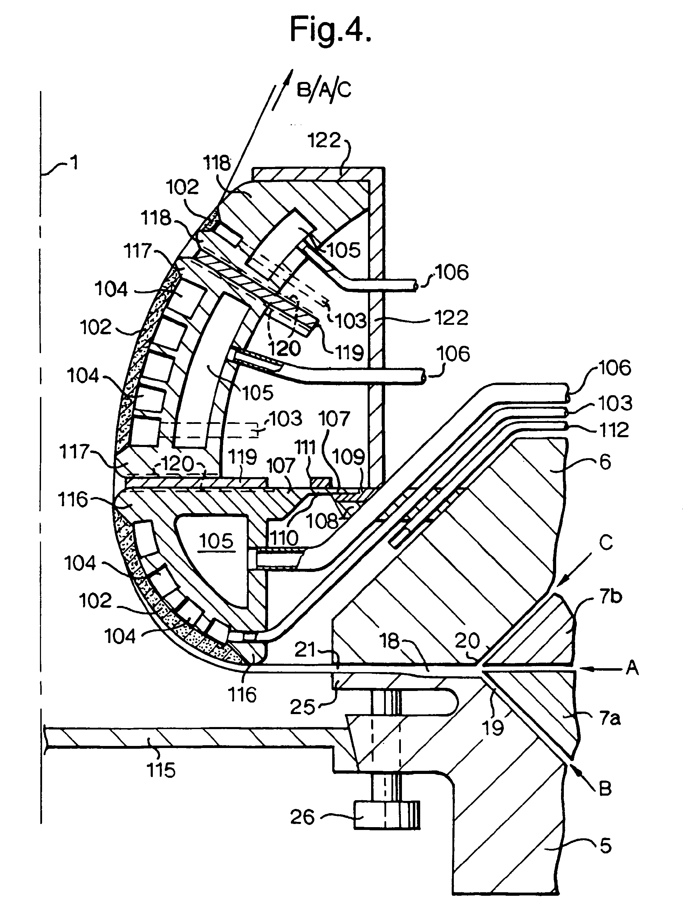

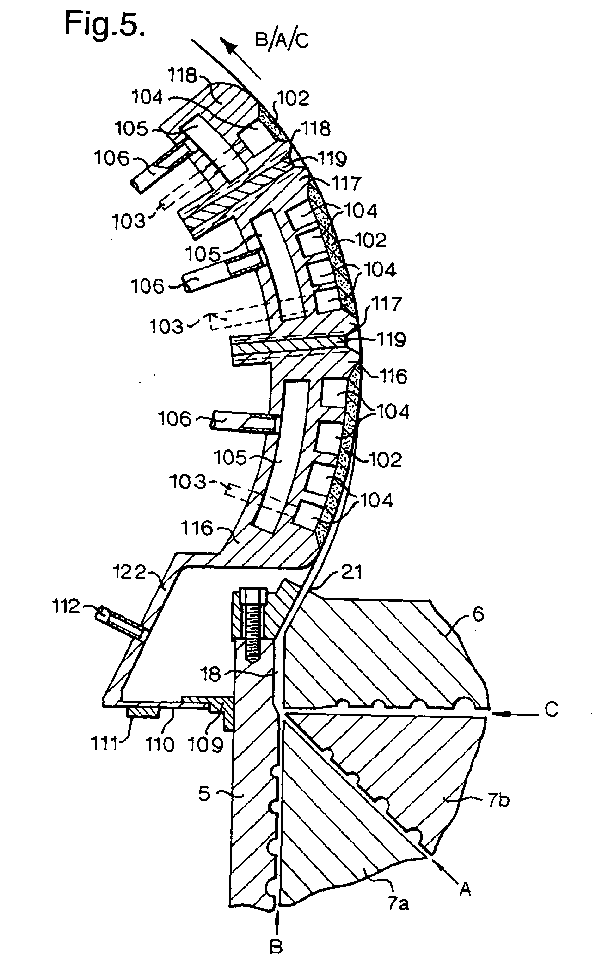

It appears from the description of fig. 1 that it is relatively difficult to obtain the most desirable combination of orientation and draw-down ratios with the relatively simple devices shown in figs. 1 and 2. The more complicated devices shown in figs. 3 to 5 improve these relations. In each construction there are used three independent parts:
a) a shock-cooling part (116),
b) a temperature-fine-adjustment part (117) and
c) a frictional device (118).

The three parts are kept thermally insulated from each other by insulating plates (119). Each of the three parts have devices for directing air for lubrication - or in the case of (118) it may be for suction and for circulation of a cooling/heating fluid, which are similar to those devices as explained in connection with fig. 1. The three parts are controlled independently of each other. During the passage over parts (116) and (117) the friction is controlled using information from the strain gauge device (111). The dotted lines (120) show grooves through which the compressed air used for air lubrication can escape.

As is explained in connection with figs. 1 and 2, it is important to avoid any significant pressure difference between the two sides of the film when the latter leaves exit (21). This is achieved by the use of separation walls (121 and 122).

In the variation of the frictional device (118) shown in fig. 6 the friction is controlled by suction, but not through microporous metal. Instead of this there are grooves (124) in this part, e.g. with a pitch of about 3 mm and about 2mm deep and 1 mm wide, with rounded crests (125), and a controlled vacuum is applied through the holes (123).

Using again the afore-mentioned example of suitable materials, the shock-cooling part (116) can conveniently be kept at a temperature which cools the film to about 140-150°C, the temperature-fine-adjustment part (117) at a temperature so as to adjust this temperature of the film more exactly e.g. at 145°C, and part (118) can be kept at 50°C to avoid sticking. The passage over the frictional device (118) takes so short time that the drop in average film temperature will be very low.

## Claims

1. A process of forming a tubular oriented film of at least one thermoplastic material having a crystallisation range by extruding a flow of at least one molten thermoplastic material from a circular extrusion die, in which process said flow having left a circular exit orifice in the die is cooled and is oriented at least in the longitudinal direction while still being at least partly molten, said longitudinal orientation taking place by a pulling force set up between the exit orifice and moving draw-down means, and in which process the still at least partly molten flow on its travel between the exit orifice and the draw-down means passes and is in frictional contact with an annular frictional device (101), **characterised in that** the frictional device (101), which can be arranged inside the bubble defined by the tubular flow or outside the bubble, is cooled from within by means of a fluid cooling medium to give its surface in contact with the flow a controllable temperature, the frictional force setup by the frictional contact being variable in controllable manner other than by adjusting the temperatures in the flow or the tensions in the flow during its contact with this device, the temperature of the surface of the frictional device and the friction being adapted to produce, between the frictional device and the draw-down means, a contribution to the longitudinal orientation, while the temperature in the flow is within the said crystallisation range or slightly above this, whereby the tubular film product has longitudinal shrinkability.

2. A process according to claim 1 in which the longitudinal shrinkability is of a factor of no less than about 4, referring to shrink testing carried out at the upper limit of the melting range of the extruded film.

3. A process according to claim 2, **characterised in that** the main proportion of the orientation takes place while the polymer material or materials partly is/are molten and partly crystallised

4. A process according to claim 3; **characterised in that** at least 5% of the polymer material or materials is crystallised.

5. A process according to any preceding claim **characterised in that** the polymer flow contains a blend of at least two compatible or compatibilised polymers, and the main proportion of the orientation takes place while one is predominantly in crystalline state and the other is predominantly in molten state.

6. A process according to any of the preceding claims, **characterised in that** the friction is controlled by air lubrication with air pressed through holes (123) in the frictional device or through microporous metal (102), which forms at least a zone of the surface which is contacted by the flow.

7. A process according to any of claims 1-5, **characterised in that** the friction is controlled by sucking the flow against the frictional device.

8. A process according to claim 7, **characterised in that** the friction is applied through microporous metal.

9. A process according to claim 7, **characterised in that** the surface which the flow contacts has a grooved pattern, the grooves (124) being circular around the die axis (1), and the grooves being subjected to a controlled under-pressure.

10. A process according to any of the preceding claims, **characterised in that** the pulling force on the frictional device is monitored and used through feed-back means for adjustment of the friction, whereby the degree of orientation is controlled.

11. A process according to any of the preceding claims, **characterised in that** upstream of the frictional device there is a generally annular, cylindrical or conical shock-cooling part (116) inside or outside the bubble, which the flow passes in a generally frictionless or low friction manner this part being cooled from its inside (105) by means of a fluid cooling medium and kept at a temperature which is sufficiently low to take away at least half of the heat needed to bring the temperature in the flow down to the desired value for the orientation.

12. A process according to claim 11 in which the flow past the shock-cooling device is lubricated by air lubrication through microporous metal (102) or through holes.

13. A process according to any of the preceding claims, **characterised in that** upstream of the frictional device, and downstream of the shock-cooling part defined in claim 11 if any, there is a temperature-fine-adjustment part (117) which is annular, conical or circular cylindrical and is passed by the flow in a frictionless or low friction manner and is cooled or heated from its inside (105) by a fluid medium for a fine adjustment of the average temperature in the flow.

14. A process according to any of the preceding claims, **characterised in that** the following succession of apparatus parts are in close proximity to one another or mutually connected through low-heat-transfer connections (119) all parts being inside or all outside the bubble:
a) the diepart (6) forming one side of the exit orifice,
b) the shock-cooling part (116) defined in claim 11, if present,
c) the temperature fine adjustment part (117) defined in claim 13, if present, and
d) the frictional device (101) defined in claim 1.

15. A process according to any of the preceding claims, **characterised in that** the flow leaves the exit orifice under an angle of at least 20° to the axis (1) of the die, its direction of movement pointing either away or towards the axis, then meets a cooling part which is in close proximity to the exit orifice, this cooling part being either
a) the shock-cooling part (116) defined in claim 11 if present, or
b) the temperature fine adjustment part (117)defined in claim 13 if present, or
c) the frictional device (101) defined in claim 1,
a substantial part of the zone in which the flow follows the said part or assemblage of parts being rounded when seen in axial section, so that the film gradually is turned at least 20° in the direction towards the die axis while it moves over this part or this assemblage of parts.

16. A process according to claim 15, **characterised in that** the exit orifice of the die either is at the outer peripherical surface of the die or, If the die has a central cavity which is defined by an inner periphery, is at the inner peripherical surface of the die.

17. A process according to claim 16. **characterised in that** the flow leaves the die under an angle of 90° or close to 90° to the axis.

18. A process according to any of the preceding claims, **characterised in that** if the frictional device is inside the bubble, the part of the air which is contained (114) in the flow before the latter meets the frictional device, which is air 1; is closed off from the air which is contained in the flow after the latter has left the frictional device, which is air 2, and air 2 is kept under pressure which is substantially higher than the pressure in the ambient atmosphere, while the pressure in air 1 approximately is kept at this ambient pressure, and if the frictional device is outside the bubble, there is provided a closed space (114) between the die part (6) and the frictional device (101) for the air surrounding the bubble, and the air pressure inside the bubble is kept substantially higher than the ambient pressure, while the outside pressure within the said closed space approximately matches the pressure inside the bubble.

19. A process according to any of the preceding claims, **characterised in that** the flow is a coextrudate of at least two layers.

20. A process according to any of the preceding claims, **characterised in that**, in order to produce a tubular film with a predominantly helical orientation, there is established a rotation between a first end comprising the draw-down means and a second end comprising the extrusion die, the frictional device, the shock-cooling part if present, and the temperature fine adjustment part if present.

21. A process according to any of the preceding claims, **characterised in that** the parameters of the process are adapted to provide a tubular film with an orientation which is predominantly longitudinal or follows a helical direction in the tube.

22. A process according to claim 21 in which the tubular film is cut to generate a web with a biased dominant direction of orientation and in which a crosslaminate is formed comprising two such webs arranged with their dominant direction of orientation crossing each other.

23. A process according to claim 22, in which the flow leaving the die is a coextrudate of three or more layers.

24. Process according to claim 22 or 23 in which the tubular film is a coextrudate with an external heat-seal or lamination layer on one or both surfaces.

25. Apparatus for extruding thermoplastic material (A) comprising an annular die having a circular exit orifice (21) through which the molten material flows and moving draw-down means for exerting longitudinal tension in the tube of material extruded through the die whereby the material is oriented in the longitudinal direction whilst still at least partially molten, and, between the exit orifice (21) and the draw-down means, an annular frictional device (101) arranged for contact with the flow of thermoplastic material either inside the tube or outside the tube, **characterised in that** the frictional device (101) comprises means (102, 103, 104, 105) to allow control of the friction between the flow and the device and is cooled from within by fluid cooling medium flowing through a cavity (105) inside the frictional device (101), whereby the tension between the draw-down means and the frictional device may be varied to confer a controlled contribution to the longitudinal orientation.

26. Apparatus according to claim 25 in which the surface of the frictional device over which the flow of material passes is provided with holes (123) or is made of microporous metal (102) for inwards or outwards passage of air.

27. Apparatus according to claim 26 comprising a vacuum pump for imposing an inward flow of air into the frictional device through the holes (123) or microporous metal (102).

28. Apparatus according to claim 27 in which the surface of the frictional device has a grooved pattern, the grooves (124) being circular around the die axis.

29. Apparatus according to any of claims 25 to 28 which comprises a means (111) for measuring the tension exerted on the frictional device and for using this measurement to control the friction between the flow and the friction device.

30. Apparatus according to any of claims 25 to 29 **characterised by** a generally annular, circular cylindrical or conical shock-cooling part (116) upstream of the frictional device past which the extruded flow passes in a frictionless or low friction manner, which is cooled by a flow of cooling medium through its interior (105) whereby at least half the heat required to cool the flow to a temperature suitable for orientation may be removed from the flow.

31. Apparatus according to claim 30 in which the shock-cooling part (105) is provided with air lubrication means (102, 104) to lubricate the passage of the flow over the surface.

32. Apparatus according to claim 31 in which the air lubrication means comprises holes in or microporous metal (102) at the surface of the shock-cooling part and a compressor for imposing an outward flow of air through the holes or micropores.

33. Apparatus according to any of claims 25 to 32 **characterised by** a generally annular, circular cylindrical or conical temperature-fine-adjustment part (117) upstream of the frictional device and downstream of the shock-cooling part, if any, over which the extruded flow passes in a frictionless or low friction manner which is cooled or heated by a flow of fluid medium through its interior (105).

34. Apparatus according to any of claims 25 to 33 in which the following successive parts have low-heat-transfer connections between them and are all inside or all outside the bubble:
a) the diepart (6) forming one side of the exit orifice;
b) the shock-cooling part (116), if any;
c) the temperature-fine-adjustment part (117), if any; and
d) the frictional device (101).

35. Apparatus according to any of claims 25 to 34 **characterised in that** the die is arranged for the flow of extruded material to leave the exit orifice under an angle of at least 20° to the axis (1) of the die, the angle being directed towards or away from the axis, and **in that** the device, that is immediately downstream from the exit orifice, which is the shock-cooling part (116), the temperature-fine-adjustment part (117), or the frictional device (101), has a rounded profile when seen in axial section whereby the flow of material passes around said rounded profile so that its direction is turned by at least 20°.

36. Apparatus according to claim 35 in which the exit orifice (21) is at the outer, peripherical surface of the die.

37. Apparatus according to claim 36 in which the frictional device (101) is inside the bubble.

38. Apparatus according to claim 35 in which the exit orifice (21) is at the inner peripherical surface of the die.

39. Apparatus according to claim 38 in which the frictional device (101) is outside the bubble.

40. Apparatus according to any of claims 36 to 39 in which the flow of extruded material leaves the die under an angle of about 90° to the axis.

41. Apparatus according to claim 37 which comprises means (121) for closing off the space (114) in the interior of the tube before the frictional device (101, 118) from the space in the interior of the tube after the frictional device and which comprises means (112) for imposing a higher air pressure in the space after the frictional device (101, 118).

42. Apparatus according to claim 39 which comprises means (113, 122) for closing the space (114) between the die and the frictional device (101) and for means imposing an air pressure higher than ambient in the closed space (114), and means (115) for closing the space in the bubble from the atmosphere and for imposing an air pressure higher than ambient in the bubble.

43. Apparatus according to any of claims 25 to 42 in which the die coextrudes at least two thermoplastic materials (A, B, C).

44. Apparatus according to any of claims 25 to 43 in which the draw-down means is capable of rotation relative to the extrusion die (5, 6, 7a, 7b) and frictional device (101).

45. Apparatus according to any of claims 25 to 43 further comprising means for cutting the tube after the draw-down means to form a web with a biassed dominant direction of orientation and means for laminating two such webs such that their dominant directions of orientation cross one another.

## Patentansprüche

1. Verfahren zur Formgebung eines rohrfömig orientierten Films aus wenigstens einem thermoplastischen Materiales mit einem Kristallisationsbereich durch Extrusion eines Flusses aus wenigstens einem aufgeschmolzenem thermoplastischen Materiales aus einem Extrusionswerkzeug mit einer kreisförmigen Austragsöffnung, bei welchem Verfahren der Fluss nach Verlassen der kreisförmigen Auslassöffnung im Werkzeug gekühlt und wenigstens in Längsrichtung orientiert wird, während der Fluss noch wenigstens teilweise aufgeschmolzen ist, wobei die längsgerichtete Orientierung durch eine Zugkraft bewirkt wird, die zwischen der Austrittsöffnung und einer Abzugseinrichtung wirkt, und in welchem Verfahren der noch wenigstens teilweise aufgeschmolzene Fluss auf seinem Weg zwischen Austrittsöffnung und Abzugseinrichtung vorbeiströmt an und in Reibkontakt ist mit einer kreisförmigen Reibeinrichtung (101), **dadurch gekennzeichnet, dass** die Reibeinrichtung (101), die innerhalb der durch den rohrförmigen Fluss gebildeten Blase oder ausserhalb der Blase angeordnet sein kann, von innen heraus vermittels eines fluiden Kühlmittels gekühlt wird, um ihrer in Berührung mit dem Fluss stehenden Oberfläche eine beeinflussbare Temperatur zu vermitteln, die Reibkraft erzeugt durch den Reibkontakt in einstellbarer Art variabel ist ausser durch Einstellung der Temperaturen im Fluss oder der Spannungen im Fluss während seiner Berührung mit dieser Einrichtung, wobei die Temperatur der Oberfläche der Reibeinrichtung und der Reibung so eingestellt ist, dass sie zwischen der Reibeinrichtung der Abzugseinrichtung einen Beitrag zur Längsorientierung leistet, während die Temperatur im Fluss innerhalb des Kristallisationsbereiches oder leicht darüber ist und wobei das rohrförmige Filmprodukt eine längsgerichtete Schrumpffähigkeit aufweist.

2. Verfahren nach Anspruch 1, bei dem die Längsschrumpffähigkeit einen Faktor nicht kleiner als ungefähr 4 aufweist in bezug auf Schrumpfversuche ausgeführt an der oberen Grenze des Schmelzbereiches des extrudierten Filmes.

3. Verfahren nach Anspruch 2, **dadurch gekennzeichnet, dass** der Hauptteil der Orientierung stattfindet während das Polymermaterial oder Polymermaterialien teilweise geschmolzen und teilweise kristallisiert ist bzw. sind.

4. Verfahren nach Anspruch 3, **dadurch gekennzeichnet, dass** mindestens 5% des Polymermateriales oder der Polymermaterialien kristallisiert ist bzw. sind.

5. Verfahren nach einem der vorangehenden Ansprüche, **dadurch gekennzeichnet, dass** der Fluss eine Mischung aus mindestens zwei miteinander verträglichen oder verträglich eingestellten Polymeren umfasst und dass die Orientierung stattfindet während ein Polymer in überwiegend kristallinem Zustand und das andere in überwiegend aufgeschmolzenem Zustand ist.

6. Verfahren nach einem der vorangehenden Ansprüche, **dadurch gekennzeichnet, dass** die Reibung durch Luftschmierung einstellbar ist vermittels Luft, die durch Löcher (123) in der Reibungseinrichtung pressbar ist, oder durch mikroporöses Metall (102), das mindestens einen Bereich der Oberfläche bildet, welche durch den Fluss berührt wird.

7. Verfahren nach einem der Ansprüche 1-5, **dadurch gekennzeichnet, dass** die Reibung durch Säugen des Flusses gegen die Reibungseinrichtung einstellbar ist.

8. Verfahren nach Anspruch 7, **dadurch gekennzeichnet, dass** die Reibung durch das mikroporöse Metall aufgebracht wird.

9. Verfahren nach Anspruch 7, **dadurch gekennzeichnet, dass** die Oberfläche, die der Fluss berührt, ein gerilltes Muster aufweist, die Rillen (124) kreisförmig um die Werzeugachse (1) verlaufend ausgebildet und die Rillen einem einstellbaren Unterdruck ausgesetzt sind.

10. Verfahren nach einem der vorangehenden Ansprüche, **dadurch gekennzeichnet, dass** die Zugkraft an der Reibungseinrichtung überwacht und genutzt wird durch Rückmeldungs-Einrichtungen zur Einstellung der Reibung, wodurch der Grad der Orientierung einstellbar wird.

11. Verfahren nach einem der vorangehenden Ansprüche, **dadurch gekennzeichnet, dass** aufstromseitig der Reibungseinrichtung ein im wesentlichen kreisförmiges zylindrisches oder konisches Schockkühlteil (116) innerhalb oder ausserhalb der Blase vorgesehen ist, das der Fluss im wesentlichen reibungsfrei oder unter geringer Reibung entlang strömt, wobei dieses Teil von seinem Inneren (105) ausgehend vermittels eines fluiden Kühlmittels gekühlt und bei einer Temperatur gehalten wird, die ausreichend niedrig ist, um wenigstens die Hälfte der Wärme abzuführen, die notwendig ist, um die Temperatur im Fluss auf den gewünschten Wert zur Orientierung abzusenken.

12. Verfahren nach Anspruch 11, bei dem der an dem Schockkühlteil entlang fliessende Fluss vermittels Luftkühlung durch mikroporöses Metall (102) oder durch Löcher gekühlt wird.

13. Verfahren nach einem der vorangehenden Ansprüche, **dadurch gekennzeichnet, dass** aufstromseitig der Reibungseinrichtung und abstromseitig des Schockkühlungsteiles (beschrieben in Anspruch 11, sofern vorgesehen) ein Temperaturfeineinstellungsteil (117), das kreisförmig, konisch oder kreisförmig zylindrisch ausgebildet ist, vorgesehen ist, vom Fluss reibungsfrei oder unter geringer Reibung überströmt und von seinem Inneren heraus durch ein fluides Medium gekühlt oder erwärmt wird zur Feineinstellung der Durchschnittstemperatur des Flusses.

14. Verfahren nach einem der vorangehenden Ansprüche, **dadurch gekennzeichnet, dass** folgende Aneinanderreihung von Vorrichtungsteilen nahe zu einander angeordnet oder miteinander vermittels Niedrigtemperatur-Uebertragungsverbindungen (119) verbunden sind, wobei alle Teile innerhalb oder ausserhalb der Blase sind:
a) das Werkzeugteil (6), das eine Seite der Austrittsöffnung bildet,
b) das Schockkühlungsteil (116) (beschrieben in Anspruch 11, sofern vorgesehen),
c) das Temperaturfeineinstellungsteil (117) (beschrieben in Anspruch 13, sofern vorgesehen),
d) die Reibungseinrichtung (101) (definiert in Anspruch 1).

15. Verfahren nach einem der vorangehenden Ansprüche, **dadurch gekennzeichnet, dass** der Fluss die Austrittsöffnung unter einem Winkel von wenigstens 20° zur Achse (1) des Werkzeuges verlässt, seine Bewegungsrichtung weg von der oder zur Achse weist, dann auf das Kühlteil trifft, das sich in unmittelbarer Nähe zu der Austrittsöffnung befindet, wobei dieses Kühlteil entweder ein
a) ein Schockkühlteil (116) beschrieben in Anspruch 11, sofern vorgesehen, oder
b) ein Temperaturfeineinstellungsteil (117), definiert in Anspruch 13, sofern vorgesehen, oder
c) die Reibungseinrichtung (101), definiert in Anspruch 1 ist,
und ein wesentlicher Teil der Zone, in dem der Fluss dem Teil der Zusammenstellung von Teilen folgt, in axialer Richtung gesehen gerundet ausgebildet ist, so dass der Film allmählich wenigstens 20° in Richtung der Werkzeugachse gelenkt wird, während er sich über dieses Teil oder die Zusammenstellung der Teile bewegt.

16. Verfahren nach Anspruch 15, **dadurch gekennzeichnet, dass** die Austrittsöffnung des Werkzeuges an der äusseren Umfangsfläche des Werkzeuges oder an der inneren Umfangsfläche vorgesehen ist, sofern in letzterem Fall das Werkzeug eine mittige Ausnehmung aufweist, die durch einen inneren Umfang definiert ist.

17. Verfahren nach Anspruch 16, **dadurch gekennzeichnet, dass** der Fluss das Werkzeug unter einem Winkel von 90° oder nahe 90° zur Achse verlässt.

18. Verfahren nach einem der vorangehenden Ansprüche, **dadurch gekennzeichnet, dass** im Falle die Reibungseinrichtung innerhalb der Blase angeordnet ist, der Teil Luft, der im Fluss enthalten (114) ist, bevor letzterer auf die Reibungseinrichtung trifft, welche Luft 1 ist, von der Luft abgesperrt wird, die im Fluss enthalten, nachdem letzterer von der Reibungseinrichtung abgelaufen ist, welche Luft 2 ist, und Luft 2 unter einem Druck gehalten wird, der deutlich höher ist als der Druck der Umgebungsathmosphäre, wohingegen der Druck in Luft 1 annähernd auf Umgebungsdruck gehalten wird und im Falle die Reibungseinrichtung ausserhalb der Blase angeordnet ist, ist ein geschlossener Raum (114) vorgesehen zwischen Werkzeug (6) und Reibungseinrichtung (101) für die die Blase umgebende Luft, wobei der Luftdruck innerhalb der Blase wesentlich höher gehalten wird als der Umgebungsdruck, wobei der Aussendruck innerhalb des geschlossenen Raumes ungefähr dem Druck innerhalb der Blase entspricht.

19. Verfahren nach einem der vorangehenden Ansprüche, **dadurch gekennzeichnet, dass** der Fluss ein zweischichtiges Koextrudat ist.

20. Verfahren nach einem der vorangehenden Ansprüche, **dadurch gekennzeichnet, dass** zur Herstellung eines rohrfömigen Filmes mit einer überwiegend spiraligen Orientierung eine Drehung zwischen einem ersten Ende, umfassend die Abzugseinrichtung und einem zweiten Ende, umfassend das Extrusionswerkzeug, die Reibungseinrichtung, die Schockkühleinrichtung, sofern vorgesehen, und dem Temperaturfeineinstellungsteil, sofern vorgesehen, erzeugt wird.

21. Verfahren nach einem der vorangehenden Ansprüche, **dadurch gekennzeichnet, dass** die Verfahrensparameter zur Erzeugung eines rohrförmigen Filmes mit einer überwiegend längsgerichteten Orientierung oder einer, die einer spiralförmigen Richtung im Rohr folgt, eingestellt sind.

22. Verfahren nach Anspruch 21, bei dem der rohrförmige Film zur Erzeugung eines Gewebes mit einer einseitig dominierenden Orientierungsrichtung geschnitten wird und bei dem ein Kreuzlaminat gebildet wird, umfassend zwei solcher Gewebe, deren dominierende Orientierungsrichtungen einander kreuzen.

23. Verfahren nach Anspruch 22, **dadurch gekennzeichnet, dass** der das Werkzeug verlassende Fluss ein Koextrudat aus drei oder mehr Schichten ist.

24. Verfahren nach Anspruch 22 oder 23, bei dem der rohrförmige Film ein Koextrudat mit einer äusseren Heissiegelschicht oder eine Laminierschicht auf einer oder beiden Oberflächen ist.

25. Vorrichtung zur Extrusion eines Materiales (A), umfassend ein ringförmiges Werkzeug mit einer kreisförmigen Austrittsöfnnung (21), durch die das aufgeschmolzene Material fliesst und eine sich bewegende Abzugseinrichtung zur Erzeugung einer längsgerichteten Spannung im Rohr aus Material extrudiert durch das Werkzeug, wobei das Material in Längsrichtung orientiert wird, während es noch wenigstens teilweise aufgeschmolzen ist, und zwischen der Austrittsöffnung (21) und der Abzugseinrichtung ein Reibungsteil (101) angeordnet ist zur Berührung mit dem Fluss aus thermoplastischem Material entweder innerhalb oder ausserhalb des Rohres, **dadurch gekennzeichnet, dass** das Reibungsteil Teile (102,103,104,105) umfasst zur Einstellung der Reibung zwischen dem Fluss und dem Reibungsteil und welches von innen durch ein fluides Kühlmittel, das durch eine Ausnehmung (105) innerhalb des Reibungsteiles (101) fliesst, gekühlt wird, wobei die Spannung zwischen der Abzugseinrichtung und des Reibungsteiles veränderbar ist, um einen kontrollierten Beitrag an die Längsorientierung zu leisten.

26. Vorrichtung nach Anspruch 25, bei der die Oberfläche des Reibungsteiles, über die der Materialfluss strömt, mit Löchern (123) versehen ist oder aus mikroporösem Metall (102) für nach innen oder nach aussen gerichteten Luftdurchtritt gebildet ist.

27. Vorrichtung nach Anspruch 26, umfassend eine Vakuumpumpe zur Erzeugung eines einwärts durch die Löcher (123) oder das mikroporöse Metall in das Reibungsteil gerichteten Luftfluss.

28. Vorrichtung nach Anspruch 27, bei der die Oberfläche des Reibungsteiles ein gerilltes Muster aufweist, wobei die Rillen kreisförmig um die Achse sind.

29. Vorrichtung nach Anspruch 25 bis 28, umfassend eine Einrichtung (111) zur Messung der auf das Reibungsteil ausgeübten Spannung und Benutzung der Messwerte zur Einstellung der Reibung zwischen Fluss und Reibungsteil.

30. Vorrichtung nach einem der Ansprüche 25 bis 28, **gekennzeichnet durch** ein im wesentlichen ringförmiges, rundzylindrisches oder konisches Schockkühlungsteil (116) aufstromseititg des Reibungsteiles, entlang dem der extrudierte Fluss reibungsfrei oder mit geringer Reibung.strömt, welches mit einem Kühlmittelfluss aus seinem Inneren (105) heraus gekühlt wird, wobei wenigstens die Hälfte der Wärme zur Kühlung des Flusses auf eine Temperatur passend zur Orientierung aus dem Fluss abführbar ist.

31. Vorrichtung nach Anspruch 30, bei der das Schockkühlungsteil (116) mit Luftschmierungseinrichtungen (102,104) zur Schmierung des über die Oberfläche passierenden Flusses versehen ist.

32. Vorrichtung nach Anspruch 31, bei der die Luftschmierungseinrichtungen Löcher in oder ein mikroporöses Metall (102) an der Oberfläche des Schockkühlungsteiles und einen Kompressor umfassen zur Aufbringung eines nach aussen gerichteten Luftstromes durch die Löcher oder Mikroporen.

33. Vorrichtung nach einem der Ansprüche 25 bis 32, **gekennzeichnet durch** ein im wesentlichen ringförmiges, rundzylindrisches oder konisches Temperaturfeineinstellungsteil (117) aufstromseitig von dem Reibungsteil und abstromseitig des Schockkühlungsteiles, sofern vorgesehen, über welches der extrudierte Fluss reibungsfrei oder unter geringer Reibung fliesst, welches **durch** ein **durch** sein Inneres (105) strömendes flüssiges Medium gekühlt wird.

34. Vorrichtung nach einem der Ansprüche 25 bis 33, bei der die folgenden aufeinanderfolgenden Teile Niedrigtemperatur-Uebertragungsverbindungen zwischen sich aufweisen und alle innerhalb oder ausserhalb der Blase angeordnet sind:
a) das Werkzeugteil (6), das eine Seite der Austrittsöffnung bildet;
b) das Schockkühlungsteil (116) sofern vorgesehen;
c) das Temperaturfeineinstellungsteil (117), sofern vorgesehen;
d) das Reibungsteil (101).

35. Vorrichtung nach einem der Ansprüche 25 bis 34, **dadurch gekennzeichnet, dass** das Werkzeug eingestellt ist, so dass der Fluss extrudierten Materiales die Austrittsöffnung unter einem Winkel von mindestens 20° zur Aches (1) des Werkzeuges verlässt, wobei der Winkel zur oder weg von der Achse gerichtet ist, und **dadurch** die Einrichtung unmittelbar abstromseitig von der Austrittsöffnung das Schockkühlungsteil (116), das Temperaturfeineinstellungs-teil (117) oder das Reibungsteil (101) ist, wobei die Einrichtung in axialer Richtung gesehen ein gerundetes Profil aufweist, so dass der Materialfluss, der um das gerundete Profil strömt, in seiner Fliessrichtung um wenigstens 20° umgelenkt ist.

36. Vorrichtung nach Anspruch 35, bei der die Austrittsöffnung (21) an der äusseren Umfangsfläche des Werkzeuges ist.

37. Vorrichtung nach Anspruch 36, bei der das Reibungsteil (101) innerhalb der Blase ist.

38. Vorrichtung nach Anspruch 35, bei dem die Austrittsöffnung (21) an der inneren Umfangsfläche des Werkzeuges vorgesehen ist.

39. Vorrichtung nach Anspruch 38, bei der der Reibungsteil (101) ausserhalb der Blase angeordnet ist.

40. Vorrichtung nach einem der Ansprüche 36 bis 39, bei der der Fluss extrudierten Materiales das Werkzeug unter einem Winkel von 90° zu dessen Achse verlässt.

41. Vorrichtung nach Anspruch 37, umfassend Einrichtungen (121) zur Schliessung des Raumes (114) im Inneren des Rohres vor dem Reibungsteil (101,118) gegenüber dem Raum im Rohr nach dem Reibungsteil und die Einrichtungen (112) umfasst zur Aufbringung eines höheren Luftdruckes im Raum nach dem Reibungsteil (101, 118).

42. Vorrichtung nach Anspruch 39, die Einrichtungen (113,122) zur Schliessung des Raumes (114) zwischen dem Werkzeug und dem Reibungsteiles (101) und Einrichtungen zur Aufbringung eines Luftdruckes in dem geschlossenen Raum (114) höher als der Umgebungsluftdruck und Einrichtungen zur Schliessung des Raumes in der Blase gegenüber der Atmosphäre und Aufbringung eines Luftdruckes in der Blase höher als der Umgebungsluftdruck umfasst.

43. Vorrichtung nach einem der Ansprüche 25 bis 42, bei der das Werkzeug wenigstens zwei thermoplastische Materialien (A,B,C) extrudiert.

44. Vorrichtung nach einem der Ansprüche 25 bis 43, bei der die Abzugseinrichtung drehbar relativ zum Extrusionswerkzeug (5,6,7a,7b) und Reibungsteil (101) ausgebildet ist.

45. Vorrichtung nach einem der Ansprüche 25 bis 43, weiter umfassend Einrichtungen zur Schneidung des Rohres nach der Abzugseinrichtung zur Bildung eines Gewebes mit einer überwiegend dominanten Orientierungsrichtung und Mittel zur Laminierung zweier solcher Gewebe, so dass ihre vorherrschende Orientierungsrichtungen einander kreuzen.

## Revendications

1. Processus de formation d'un film orienté tubulaire constitué d'au moins un matériau thermoplastique possédant une plage de cristallisation, en extrudant un flux d'au moins un matériau thermoplastique fondu provenant d'une filière circulaire, dans lequel ledit flux ayant quitté un orifice de sortie circulaire situé dans la filière est refroidi et est orienté au moins dans la direction longitudinale tout en étant toujours au moins partiellement fondu, ladite orientation longitudinale ayant lieu à l'aide d'une force de traction définie entre l'orifice de sortie et un moyen de striction mobile, et dans lequel le flux, toujours au moins partiellement fondu, se déplace sur son trajet situé entre l'orifice de sortie et le moyen de striction, et est en contact par frottement avec un dispositif de frottement annulaire (101), **caractérisé en ce que** le dispositif de frottement (101) peut être agencé à l'intérieur de la bulle définie par le flux tubulaire ou à l'extérieur de la bulle, est refroidi depuis l'intérieur à l'aide d'un milieu de refroidissement fluide afin que sa surface en contact avec le flux possède une température contrôlable, la force de frottement définie par le contact par frottement étant variable de manière contrôlable d'une façon autre que par le biais de l'ajustement des températures du flux ou des tensions situées au sein du flux pendant son contact avec ce dispositif, la température de la surface du dispositif de frottement et le frottement étant adaptés pour produire, entre le dispositif de frottement et le moyen de striction, une contribution à l'orientation longitudinale, tandis que la température du flux se situe dans le cadre de ladite plage de cristallisation ou légèrement au-dessus de celle-ci, moyennant quoi le film tubulaire possède une rétractabilité longitudinale.

2. Processus selon la revendication 1, dans lequel la rétractibilité longitudinale est un facteur non inférieur à environ 4, en référence au texte de rétraction effectué à la limite supérieure de la plage de fusion du film extrudé.

3. Processus selon la revendication 2, **caractérisé en ce que** la partie principale de l'orientation s'effectue pendant que le ou les matériau(x) polymère(s) est/sont partiellement fondu(s) et partiellement cristallisé(s).

4. Processus selon la revendication 3, **caractérisé en ce qu'**au moins 5% du ou des matériau(x) polymère(s), sont cristallisés.

5. Processus selon l'une quelconque des revendications précédentes, **caractérisé en ce que** le flux de polymère contient un mélange d'au moins deux polymères compatibles ou compatibilisés, et la partie principale de l'orientation s'effectue pendant que l'un est principalement à l'état cristallin et que l'autre est principalement à l'état fondu.

6. Processus selon l'une quelconque des revendications précédentes, **caractérisé en ce que** le frottement est contrôlé par lubrification par air avec de l'air pressé dans des trous (123) situés dans le dispositif de frottement ou dans du métal microporeux (102), qui forme au moins une zone de la surface qui est touchée par le flux.

7. Processus selon l'une quelconque des revendications 1 à 5, **caractérisé en ce que** le frottement est contrôlé en aspirant le flux contre le dispositif de frottement.

8. Processus selon la revendication 7, **caractérisé en ce que** le frottement est appliqué par le biais d'un métal microporeux.

9. Processus selon la revendication 7, **caractérisé en ce que** la surface qui est touchée par le flux possède une structure rainurée, les rainures (124) étant circulaires autour de l'axe de la filière (1), et les rainures étant soumises à une sous-pression contrôlée.

10. Processus selon l'une quelconque des revendications précédentes, **caractérisé en ce que** la force de traction exercée sur le dispositif de frottement est surveillée et utilisée par le biais d'un moyen asservi destiné à l'ajustement du frottement, moyennant quoi le degré d'orientation est contrôlé.

11. Processus selon l'une quelconque des revendications précédentes, **caractérisé en ce qu'**en amont du dispositif de frottement se trouve une partie de refroidissement par chocs généralement annulaire, cylindrique ou conique (116) située à l'intérieur ou à l'extérieur de la bulle, qui est traversée par le flux d'une manière généralement dépourvue de frottement ou avec un faible frottement, cette partie étant refroidie depuis l'intérieur (105) à l'aide d'un milieu de refroidissement fluide et maintenue à une température qui est suffisamment faible pour éloigner au moins la moitié de la chaleur nécessaire pour réduire la température du flux jusqu'à la valeur souhaitée en vue de l'orientation.

12. Processus selon la revendication 11, dans lequel le flux passant dans le dispositif de refroidissement est lubrifié par de l'air à l'aide d'un métal microporeux (102)
ou à l'aide de trous.

13. Processus selon l'une quelconque des revendications précédentes, **caractérisé en ce que**, en amont du dispositif de frottement, et en aval de la partie de refroidissement par chocs définie dans la revendication 11, le cas échéant, se trouve une partie d'ajustement précis de la température (117) qui est annulaire, conique, circulaire ou cylindrique et qui est traversée par le flux d'une manière dépourvue de frottement ou avec un faible frottement, et qui est refroidie ou réchauffée depuis l'intérieur (105) par un milieu fluide destiné à un ajustement précis de la température moyenne du flux.

14. Processus selon l'une quelconque des revendications précédentes, **caractérisé en ce que** la succession suivante de parties de l'appareil sont à proximité les unes des autres ou mutuellement reliées à l'aide de raccordements à faible transfert thermique (119), toutes les parties étant à l'intérieur ou à l'extérieur de la bulle:
a) la partie de filière (6) formant un côté de l'orifice de sortie,
b) la partie de refroidissement par chocs (116) définie dans la revendication 11, le cas échéant,
c) la partie d'ajustement précis de la température (117) définie dans la revendication 13, le cas échéant, et
d) le dispositif de frottement (101) défini dans la revendication 1.

15. Processus selon l'une quelconque des revendications précédentes, **caractérisé en ce que** le flux quitte l'orifice de sortie à un angle d'au moins 20° par rapport à l'axe (1) de la filière, sa direction de mouvement pointant soit à l'écart de, soit vers l'axe, puis rencontre une partie de refroidissement qui est à proximité de l'orifice de sortie, cette partie de refroidissement étant soit
a) la partie de refroidissement par chocs (116) définie dans la revendication 11 le cas échéant, soit
b) la partie d'ajustement précis de la température (117) définie dans la revendication 13 le cas échéant, ou
c) le dispositif de frottement (101) défini dans la revendication 1,
une partie substantielle de la zone dans laquelle le flux suit ladite partie ou l'assemblage de parties étant arrondie lorsque l'on regarde de manière transversale et axiale, de telle sorte que le film soit progressivement tourné d'au moins 20° dans la direction allant vers l'axe de la filière pendant qu'il se déplace au-dessus de cette partie ou de cet assemblage de parties.

16. Processus selon la revendication 15, **caractérisé en ce que** l'orifice de sortie de la filière est soit au niveau de la surface périphérique extérieure de la filière, soit, si la filière possède une cavité centrale qui est définie par une périphérie intérieure, au niveau de la surface périphérique intérieure de la filière.

17. Processus selon la revendication 18, **caractérisé en ce que** le flux quitte la filière à un angle de 90° ou proche de 90° par rapport à l'axe.

18. Processus selon l'une quelconque des revendications précédentes, **caractérisé en ce que**, si le dispositif de frottement se trouve à l'intérieur de la bulle, la partie de l'air qui est contenue (114) dans le flux avant que ce dernier ne rencontre le dispositif de frottement, qui est de l'air 1, est coupée de l'air qui est contenu dans le flux après que ce dernier ait quitté le dispositif de frottement, qui est de l'air 2, et l'air 2 est maintenu sous une pression qui est sensiblement supérieure à la pression de l'atmosphère ambiante, tandis que la pression de l'air 1 est approximativement maintenue à cette pression ambiante, et, si le dispositif de frottement se trouve à l'extérieur de la bulle, un espace fermé (114) est prévu entre la partie de filière (6) et le dispositif de frottement (101) pour l'air entourant la bulle, et la pression d'air à l'intérieur de la bulle est maintenue sensiblement supérieure à la pression ambiante, tandis que la pression extérieure dans ledit espace fermé correspond approximativement à la pression à l'intérieur de la bulle.

19. Processus selon l'une quelconque des revendications précédentes, **caractérisé en ce que** le flux est un co-extrudat d'au moins deux couches.

20. Processus selon l'une quelconque des revendications précédentes, **caractérisé en ce que**, afin de produire un film tubulaire ayant une orientation principalement hélicoïdale, une rotation est établie entre une première extrémité comprenant le moyen de striction et une seconde extrémité comprenant la filière d'extrusion, le dispositif de frottement, la partie de refroidissement par chocs le cas échéant, et la partie d'ajustement précis de la température, le cas échéant.

21. Processus selon l'une quelconque des revendications précédentes, **caractérisé en ce que** les paramètres du processus sont adaptés pour fournir un film tubulaire ayant une orientation qui soit principalement longitudinale ou qui suive une direction hélicoïdale dans le tube.

22. Processus selon la revendication 21, dans lequel le film tubulaire est découpé afin de générer une bande ayant une direction d'orientation dominante inclinée, et dans lequel une lamination croisée est formée et comprend deux de ces bandes agencées avec leur direction d'orientation dominante se croisant l'une et l'autre.

23. Processus selon la revendication 22, dans lequel le flux quittant la filière est un co-extrudat de trois couches ou plus.

24. Processus selon la revendication 22 ou 23, dans lequel le film tubulaire est un co-extrudat ayant une couche externe de scellage à chaud ou de lamination sur l'une des surfaces ou les deux.

25. Appareil destiné à extruder un matériau thermoplastique (A) comprenant une filière annulaire ayant un orifice de sortie circulaire (21) par lequel le matériau fondu s'écoule, et un moyen de striction destiné à exercer une tension longitudinale dans le tube du matériau extrudé par le biais de la filière, moyennant quoi le matériau est orienté dans la direction longitudinale pendant qu'il est toujours au moins partiellement fondu et, entre l'orifice de sortie (21) et le moyen de striction, un dispositif de frottement annulaire (101) est agencé en vue d'un contact avec le flux de matériau thermoplastique à l'intérieur du tube ou à l'extérieur du tube, **caractérisé en ce que** le dispositif de frottement (101) comprend des moyens (102, 103, 104, 105) destinés à permettre un contrôle du frottement entre le flux et le dispositif et est refroidi depuis l'intérieur par un milieu de refroidissement fluide s'écoulant dans une cavité (105) située à l'intérieur du dispositif de frottement (101), moyennant quoi la tension entre le moyen de striction et le dispositif de frottement peut être variée afin d'assurer une contribution contrôlée de l'orientation longitudinale.

26. Appareil selon la revendication 25, dans lequel la surface du dispositif de frottement sur laquelle le flux de matériau passe est munie de trous (123) ou est constituée de métal microporeux (102) en vue d'un passage de l'air vers l'intérieur et vers l'extérieur.

27. Appareil selon la revendication 26, comprenant une pompe à vide destinée à imposer une entrée d'air dans le dispositif de frottement par le biais des trous (123) ou du métal microporeux (102).

28. Appareil selon la revendication 27, dans lequel la surface du dispositif de frottement possède une structure rainurée, les rainures (124) étant circulaires autour de l'axe de la filière.

29. Appareil selon l'une quelconque des revendications 25 à 28, qui comprend un moyen (111) destiné à mesurer la tension exercée sur le dispositif de frottement et à utiliser cette mesure afin de contrôler le frottement entre le flux et le dispositif de frottement.

30. Appareil selon l'une quelconque des revendications 25 à 29, **caractérisé par** une partie de refroidissement par chocs généralement annulaire, circulaire, cylindrique ou conique (116) en amont du dispositif de frottement, traversée par le flux extrudé d'une manière dépourvue de frottement ou avec un faible frottement, qui est refroidie par un flux de milieu de refroidissement passant à l'intérieur (105), moyennant quoi au moins la moitié de la chaleur nécessaire pour refroidir le flux jusqu'à une température convenant pour l'orientation peut être retirée du flux.

31. Appareil selon la revendication 30, dans lequel la partie de refroidissement par chocs (105) est munie de moyens de lubrification par air (102, 104) destinés à lubrifier le passage du flux sur la surface.

32. Appareil selon la revendication 31, dans lequel le moyen de lubrification par air comprend des trous ou un métal microporeux (102) à la surface de la partie de refroidissement par chocs, et un compresseur destiné à imposer une sortie d'air à travers les trous ou des micropores.

33. Appareil selon l'une quelconque des revendications 25 à 32, **caractérisé par** une partie d'ajustement précis de la température généralement annulaire, circulaire, cylindrique ou conique (117) en amont du dispositif de frottement et en aval de la partie de refroidissement par chocs, le cas échéant, sur laquelle le flux extrudé passe d'une manière dépourvue de frottement ou avec un faible frottement, qui est refroidie ou réchauffée par un flux de milieu fluide passant à l'intérieur (105).

34. Appareil selon l'une quelconque des revendications 25 à 33, dans lequel les parties successives suivantes possèdent des raccordements à faible transfert thermique entre celles-ci et sont toutes situées à l'intérieur ou à l'extérieur de la bulle:
la partie de filière (6) formant un côté de l'orifice de sortie,
b) la partie de refroidissement par chocs (116), le cas échéant;
c) la partie d'ajustement précis de la température (117), le cas échéant; et
d) le dispositif de frottement (101).

35. Appareil selon l'une quelconque des revendications 25 à 34, **caractérisé en ce que** la filière est agencée afin que le flux de matériau extrudé quitte l'orifice de sortie à un angle d'au moins 20° par rapport à l'axe (1) de la filière, l'angle étant dirigé vers ou à l'écart de l'axe, et **en ce que** le dispositif, qui est immédiatement en aval de l'orifice de sortie, qui est la partie de refroidissement par chocs (116), la partie d'ajustement précis de la température (117), ou le dispositif de frottement (101), possède un profil arrondi lorsque l'on regarde de manière transversale et axiale, moyennant quoi le flux de matériau passe autour dudit profil arrondi de telle sorte que sa direction soit tournée d'au moins 20°.

36. Appareil selon la revendication 35, dans lequel l'orifice de sortie (21) se trouve au niveau de la surface périphérique extérieure de la filière.

37. Appareil selon la revendication 36, dans lequel le dispositif de frottement (101) se trouve à l'intérieur de la bulle.

38. Appareil selon la revendication 35, dans lequel l'orifice de sortie (21) se trouve au niveau de la surface périphérique intérieure de la filière.

39. Appareil selon la revendication 38, dans lequel le dispositif de frottement (101) se trouve à l'extérieur de la bulle.

40. Appareil selon l'une quelconque des revendications 36 à 39, dans lequel le flux de matériau extrudé quitte la filière à un angle d'environ 90° par rapport à l'axe.

41. Appareil selon la revendication 37, qui comprend un moyen (121) destiné à isoler l'espace (114) situé à l'intérieur du tube, avant le dispositif de frottement (101, 118) de l'espace situé à l'intérieur du tube, après le dispositif de frottement, et qui comprend un moyen (112) destiné à imposer une pression d'air plus élevée dans l'espace situé après le dispositif de frottement (101, 118).

42. Appareil selon la revendication 39, qui comprend des moyens (113, 122) destinés à fermer l'espace (114) situé entre la filière et le dispositif de frottement (101) et à imposer une pression d'air supérieure à la pression ambiante dans l'espace fermé (114), et des moyens (115) destinés à isoler l'espace situé dans la bulle de l'atmosphère et à imposer une pression d'air supérieure à la pression ambiante dans la bulle.

43. Appareil selon l'une quelconque des revendications 25 à 42, dans lequel la filière co-extrude au moins deux matériaux thermoplastiques (A, B, C).

44. Appareil selon l'une quelconque des revendications 25 à 43, dans lequel le moyen de striction est capable d'effectuer une rotation par rapport à la filière d'extrusion (5, 6, 7a, 7b) et au dispositif de frottement (101).

45. Appareil selon l'une quelconque des revendications 25 à 43, comprenant en outre un moyen destiné à couper le tube après le moyen de striction, afin de former une bande ayant une direction d'orientation dominante inclinée, et un moyen destiné à laminer deux de ces bandes de telle sorte que leurs directions d'orientation dominantes se croisent.
